# EUROPEAN PATENT APPLICATION

(11) **EP 1 521 433 A2**
(43) Date of publication of application: **06.04.2005**
(21) Application number: 04380190.1
(22) Date of filing: 24.09.2004
(51) Int. Cl.: H04M 1/2745

(54) **Mobile telephone card, method of contact register management in the card, and program product for carrying out the method**

(30) Priority: 02.10.2003 ES 200302278
(71) Applicant: Vodafone Group PLC, Newbury Berkshire RG14 2FN (GB)
(72) Inventor: Gomez Diaz, Esther Consuelo, 28980 Parla-Madrid (ES)
(74) Representative: Carvajal y Urquijo, Isabel

(57) **Abstract**

A method of contact register (name, telephone number, etc.) management in a mobile telephone card, including the steps of:
- receiving at least one contact register for its storage in a phone book in the card;
- applying, for each contact register received for its storage, a position calculation algorithm to the telephone number of the contact register and obtaining a result; and
- storing each contact register received for its storage in a storage position which is, at least partly, a function of the result of the position calculation algorithm applied to the telephone number.

The invention also refers to a card and to a program product for carrying out the method.

## Description

### FIELD OF THE INVENTION

The invention is encompassed within the field of mobile telephony. As is known, English acronyms and terms are normally used to refer to elements and concepts of the field. The English acronyms and terms used in this text will be explained throughout the text.

### BACKGROUND OF THE INVENTION

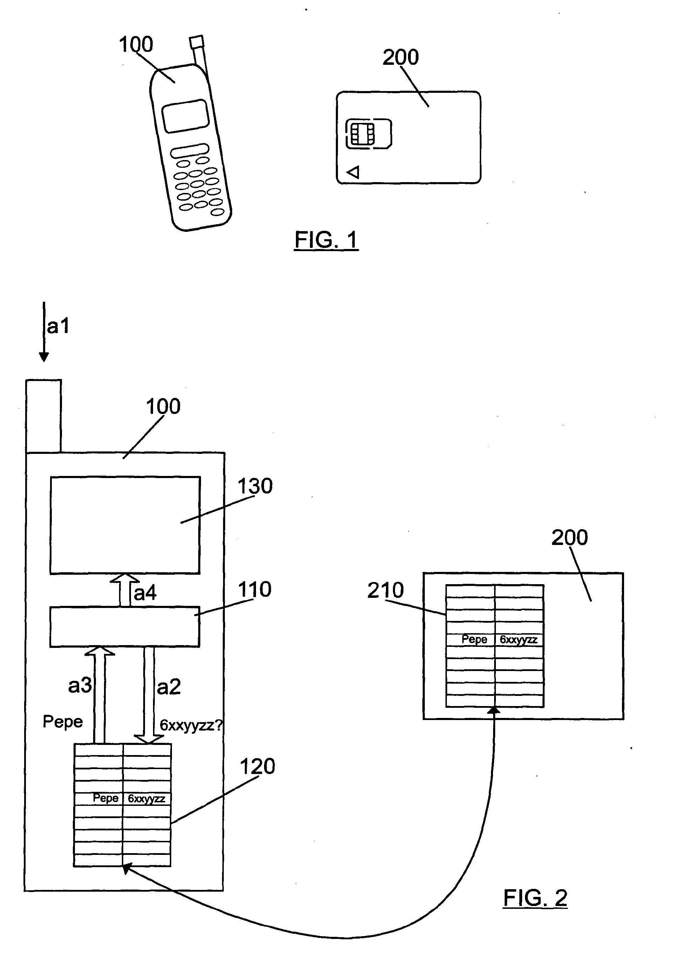

Currently, mobile telephones usually include a smart card comprising essential elements for operating the telephone. A "subscriber equipment" can be discussed, comprising, both in the GSM (Global System for Mobile Communication) system and in the GPRS (General Packet Radio Service) and UMTS (Universal Mobile Telecommunications System - also called the Third Generation of Mobile Telephony) systems (see Figure 1):
- on one hand, a terminal (100) (which is what many times is called "mobile telephone" and which includes a casing, display, keyboard, power source and several circuits); and
- on the other hand, the smart card (200).

A smart card comprises an electronic device similar to a PC with regard to its architecture, but inserted in a plastic card. Smart cards are based on an integrated circuit in which the following elements are embedded:
- CPU: Central Processing Unit. This can furthermore incorporate a cryptoprocessor.
- Volatile Memory: this is the memory unit used for temporary data storage. It is usually a RAM memory.
- Non-Volatile Memory: this memory permanently stores data. It is used for storing directories, files and applications or programs as occurs with the hard drive of a conventional PC. Two types of memory are usually referred to within this group: 1) ROM Memory: it is undeletable and some applications necessary for the start-up of the card are usually stored therein; 2) EEPROM Memory: this can be written and deleted, although it does have a lifetime which depends on the number of writings done therein. Directories, files and some applications are usually stored in this memory.
- Input/output Unit: an element through which the card can communicate with an external device, for example with a mobile terminal, a card reader, etc.

The communication of the smart card with different external devices is based on 5-byte commands in which the action to be carried out is indicated. The command is occasionally accompanied by data necessary for carrying out the action, for example, updating a file in the card. On other occasions, it is the card which must return data to the device which requested the action, for example when the action is the reading of a file.

As occurs in a PC, it is possible to install several applications of any nature in a smart card, for example:
- e-wallet applications;
- subscriber data management applications;
- security applications.

Any information related to the operating and architecture of smart cards is included in the ISO 7816 standards (from part 1 to part 9).

The smart card used in a mobile telephone must have either a SIM application (if it is GSM/GPRS) or a USIM application (if it is UMTS) installed.

The SIM (Subscriber Identity Module) application is a module or application authenticating the GSM/GPRS network subscriber to the network and stores personal information about the subscriber. The USIM (Universal Subscriber Identity Module) application carries out the same functions as the SIM application but for the UMTS network.

The following are included among its most important functions:
- It stores the subscriber code necessary for his or her univocal network identification. Said code is known with the name IMSI (International Mobile Subscriber Identity).
- It carries out the algorithms for the authentication of the subscriber in the corresponding network.
- It calculates the keys for encrypting the communication.
- It manages the PINs and their unblocking keys.
- It stores information about the operator.
- It stores information about the subscriber: phone book, short messages, etc.

All the information concerning the SIM application is included in the GSM 11.11 standard. The information related to the USIM application is included in the standards: 3GPP 31.101 and 3GPP 31.102.

The U/SIM Application Toolkit is a functionality supported on a U/SIM application. At first, mobile terminals were only capable of sending commands to the cards, whereas the cards were only capable of responding to commands received from the mobile terminal. An evolution in mobile terminals and in cards later occurred which allowed both to send as well as to receive commands. It was thus achieved that a U/SIM application Was able to request a mobile terminal to send a short message, to make a call, etc. This functionality therefore allows developing applications housed in the card (i.e., which have been loaded in the card remotely or locally) and which handle the peripherals of the mobile telephone (display, keyboard, sending short messages, making calls, etc.), opening the doors to new applications contributing added value to the mobile equipment.

These applications existing in the card and capable of sending commands to the mobile terminal are known with the name of SIM Application Toolkit when they are supported on SIM, and USIM Application Toolkit when they are supported on USIM.

The U/SIM Application Toolkit is an optional feature both of SIM and USIM applications. High-level procedures, contents and encoding of the commands are suitably specified in the GSM 11.14 standard for SIM application or 3GPP 31.111 for USIM application.

As mentioned, the storage of a subscriber phone book is included among the functions of the U/SIM applications.

The standard of this type of smart card for mobile telephones for GSM subscribers, hereinafter SIM card, defines that the subscriber phone book must be stored in a file of up to 254 registers within said card (thus, the "address" of a register in a file can be a number between 1 and 254 and be written with one byte). Each register usually comprises at least two items: on one hand, a name (real or fictitious, for example, a nickname) of a contact (person, business...) and his or her telephone number (for example, his or her MSISDN - Mobile Station International ISDN Number). The SIM card does not carry out any additional action related to the phone book but rather only serves for data storage, i.e. it simply stores the file with the 254 registers. This file can be read by the terminal. Figure 2 schematically shows some processes related to the phone book when the subscriber receives a call on his or her mobile telephone (Figure 2 shows these processes when it is the SIM application; the case of the USIM application is somewhat different):

The terminal 100 receives (step a1) a call from a person whose telephone number (MSISDN) is, for example, 6xxyyzz. The terminal processes the entry of the call in a conventional manner and, among other things, activates a phone book management module 110 stored in the terminal 100. This module begins by consulting (a2) an internal phone book 120 of the terminal in which the phone book file 210 of the SIM card has been previously copied (usually, the phone book file 210 of the SIM card is copied to the internal phone book 120 of the terminal when the card is used in the terminal for the first time). Alternatively, the phone book management module 110 directly consults the phone book file 210 of the SIM card. The phone book file 210 has 254 registers, each one comprising the identifier or name of a contact and his or her telephone number.

The consultation (a2) is focused on finding out the name of the contact corresponding to the telephone number of origin of the incoming call, i.e. the name corresponding to telephone number 6xxyyzz. It is usually preferable to carry out this search in the internal phone book 120 of the terminal, since the performance of searches in files stored in the SIM card 200 is considerably slower (due to the features inherent to smart cards). The degree of slowness increases with the number of registers which must be searched.

As a result of the consultation, the phone book management module 110 obtains (a3) the name of the contact, for example "Pepe", and then shows (a4) said name on the display 130 of the terminal, the subscriber thereby knowing who has called prior to taking the call.

The phone book management module 110 for the phone book of the terminal can also search for the telephone number corresponding to a certain name in the internal phone book 120 of the terminal or in the "standard" phone book file 210 of the SIM card. These searches are usually carried out based on a "pattern": the subscriber types some of the letters of the name, and the phone book management module 110 carries out the search and exhibits the possible contacts on the display 130 of the terminal whose names correspond to the pattern (for example, if the subscriber types "pe", the module can show a list of names on the display comprising, for example, "Pepe", "Peter", "Pederson", etc.).

The phone book management module 110 also comprises means of carrying out typical phone book management actions (adding contacts, eliminating contacts, editing, etc.) according to what the subscriber indicates using the menu commands.

One problem is that many subscribers wish to save the data of more than 254 contact registers in a mobile telephone phone book; however, the "standard" phone book of the SIM card only permits storing 254 contact registers.

Today there is a great number of terminal types for mobile telephones, and many of these terminals offer the subscriber the possibility to use an internal phone book of the terminal as a complement or as an alternative to the "standard" phone book of the SIM card. In many cases, terminals offer their subscribers much greater storage capacities than those offered by the "standard" phone book of the SIM card; terminals frequently provide internal phone books 120 with the capacity to store more than 1000 contact registers, i.e. much more than the 254 contact registers provided by the "standard" phone book of the SIM card. Furthermore, the different types of terminals frequently provide special phone book management functions, which can be specific for a certain terminal type or terminal manufacturer. This type of functions can include the grouping of contact registers (for example, the grouping of contact registers corresponding to the subscriber's job) by means of the use of special symbols (which are usually stored in the phone book along with the corresponding contact registers).

Today it is usual for subscribers to change terminals with a certain frequency (however, they keep the SIM card, which is what corresponds to their condition of subscribers in a mobile telephony network). However, this creates enough phone book-related problems.

First, if the subscriber has chosen to use the phone book of the terminal rather than the phone book of the card, he or she loses the data of the phone book when changing terminals.

One solution could be to copy the data of the phone book of the terminal to the phone book of the card before changing terminals, but this solution poses a series of problems:
- Many subscribers are not aware that they have managed their contacts by means of the phone book of the terminal, therefore they do not remember to copy the data of the contacts to the phone book of the card before changing terminals.
- On the other hand, given that phone books of the terminals many times allow storing more than 254 contacts, the subscriber can lose part of the contacts if he or she tries to copy them to the phone book of the card (which, in the case of the SIM card, does not have room for more than 254 contact registers).
- On the other hand, given that the phone books of the terminals can use special formats and symbols determined by the manufacturer of the terminal, when one changes to a new terminal type, part of the data of the phone book of the old terminal may be incomprehensible for the new terminal (for example, the special symbols used for group management).

As a result, it would be appropriate to develop a system overcoming all these problems.

An attempt to solve the problem of the limited space of the phone book file 210 of the SIM card is known consisting of "deceiving" the terminal. Basically, and for the purpose of duplicating the amount of contact registers available, two auxiliary files are created in the card, each one with a capacity of 254 contact registers. One of these files can correspond to contacts related to the subscriber's job, and the other one to contacts related to his or her personal life. Then, the subscriber decides which one of these files must be "active" and an application in the card copies the content of this file to the standard phone book file 210.

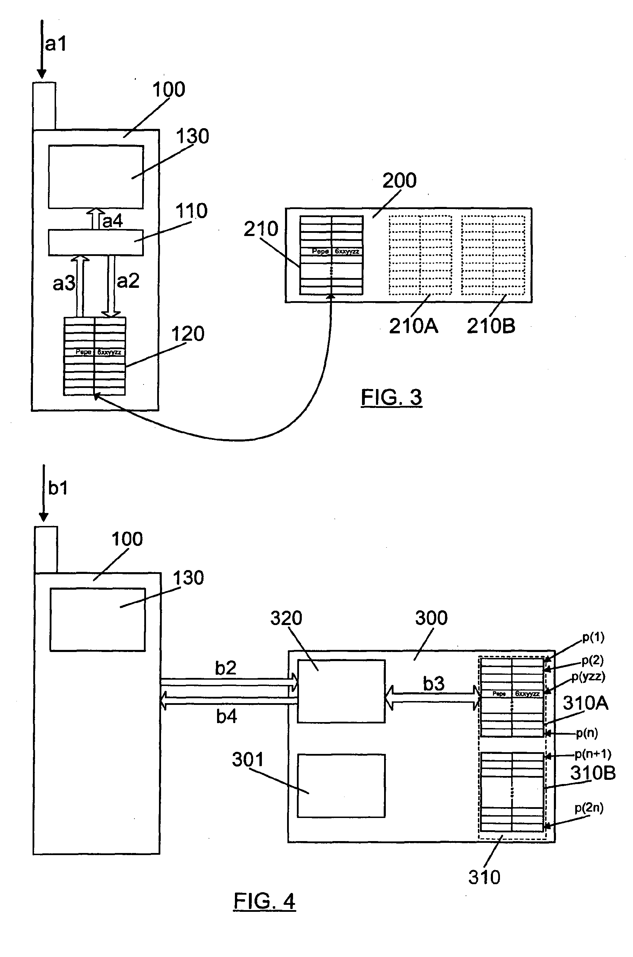

Figure 3 schematically shows this solution applied to the system of Figure 2 (identical elements have been identified with the same reference numbers as in Figure 2 and require no further explanation). As is observed, in addition to the phone book file 210, the SIM card 200 has two other files, namely, a first auxiliary file 210A with capacity for 254 contact registers, and a second auxiliary file 210B with capacity for 254 contact registers.

The subscriber chooses which of these files (210A or 210B) must be active at all times; for example, if the first file 210A corresponds to his or her work contacts and the second file 210B to his or her personal contacts, the subscriber can, when he or she begins the working day, choose to activate the first file 210A, thereby the data stored therein overwrites the data in the phone book file 210. Then, at least in theory, the subscriber can operate with the phone book in a conventional manner. Then, when the working day has concluded, he or she can change to the second file 210B (the "personal" one), the content of which then overwrites the previous content of the phone book file 210.

However, this solution has some problems. For example, even though it allows for storing in the card a total of 2x254 contact registers, only half of them can be "active" at the same time. For example, if the "work" file 210A is active and a call enters from a contact whose data is in the "personal" file 210B, the terminal cannot find the name of the contact (since the search, at first, will be limited to the "work" file 210A), unless both the "work" file 210A and the "personal" file 210B were copied in the internal phone book 120 of the terminal. Furthermore, this type of management of the phone book can give rise to problems related to the manner in which the content of the phone book file 210 is copied to the internal phone book 120 of the terminal.

To that end, it would be desirable to find a solution to the problem of space which would enable managing the phone book of the subscriber without the limitations on the number of contacts imposed by the "standard" phone book file, which would enable all the contacts to be able to be searched at all times and which did not imply the previously mentioned problems when a change of terminals occurs. On the other hand, it would be desirable for the solution to enable finding the data of a contact quickly, starting from his or her telephone number.

### DESCRIPTION OF THE INVENTION

A first aspect of the invention refers to a card of the type called "Subscriber Identity Card" (SIM, USIM card, etc.) for use in a mobile telephone terminal in a cellular mobile telephony system. The card includes a Subscriber Identity Module (in the case of GSM or UMTS, a SIM or USIM module, respectively) and a phone book comprising memory space for storing a plurality of contact registers such that each contact register is stored in a storage position within the memory space. Each contact register comprises at least one telephone number and one contact name associated to said telephone number. According to this first aspect of the invention, the phone book furthermore comprises a phone book management module, which is housed in the card and comprises:
means for receiving contact registers (for example, from the terminal in which the card is used, in which the data of the contact registers can be introduced through the keyboard, received through short messages, through information related to calls received, etc.); and
means for storing contact registers received in said memory space.

The means for storing contact registers are configured such that each contact register is stored in a storage position determined by applying a position calculation algorithm to the telephone number of the contact register, such that the storage position in which the contact register is stored is, at least partly, a function of a result of the application of said position calculation algorithm to the telephone number of the contact register.

Each contact register is thus stored in a storage position which, at least partly, depends on the telephone number and on the position calculation algorithm. Thus, when a contact register corresponding to a determined telephone number is searched for (for example, to see to whom said telephone number corresponds), it is not necessary to review all the contact registers stored in the memory space one by one until finding the telephone number in question, but rather it is possible to begin by reviewing the contact register stored in a position obtained by applying the position calculation algorithm to the telephone number searched for. The storage register can thus be located rather quickly, which is important, for example, when the contact name associated to a telephone number of origin of an incoming call is searched for, since many times the subscriber would like to see the name on the display before taking a call, but, on the other hand, does not wish to wait too long before taking the call.

The algorithm can be fairly simple: for example, if there is a memory space with 1,000 storage positions, the algorithm can consist of something as simple as taking the last three figures of a telephone number as a basis for the storage, i.e. in the case of a telephone number ending in 123, position "123" could be chosen as the preferred storage position.

The phone book management module can also comprise means for, as a response to an incoming call,
- obtaining a telephone number of origin corresponding to said incoming call (similarly to that which is customary in mobile telephones);
- applying the position calculation algorithm to said telephone number of origin and obtaining a result;
- searching for said telephone number of origin among the contact registers stored in the memory space, starting from the result of the application of the position calculation algorithm to said telephone number of origin (for example, beginning by checking if the telephone number of origin corresponds to a contact register stored in the storage position obtained by applying the position calculation algorithm to the telephone number of origin, and if it does not correspond to that register, continuing the search in nearby storage positions, for example in the next one or in the previous one, etc.);
- obtaining the contact name associated to the telephone number of origin (similarly to that which is customary in mobile telephones) once said telephone number is found among the telephone numbers stored in the memory space;
- sending to the terminal instructions to display said contact name on a display of the terminal (similarly to that which is customary in mobile telephones).

Basically, the position calculation algorithm can be a hashing algorithm. For example, the means of storing contact registers can be configured such that to store a new contact register:
a preferred storage position is calculated by applying the position calculation algorithm to the telephone number of the contact register;
it is checked if said preferred storage position is free in the memory space or if it already contains a contact register; and
   - if it is free (i.e. if a contact register has not yet been stored in said position or if a previous contact register stored in said position has been deleted), the new contact register is stored in said storage position;
   - if it already contains a contact register, the new contact register is stored in another storage position related to said preferred storage position in a predetermined manner (for example, in the first position preceding or following said preferred storage position and which is not already occupied by a contact register, or in a position calculated by applying a certain algorithm to the telephone number). Thus, when the memory space contains many free storage positions, it is fairly likely that a new contact register can be stored in a "preferred" storage position, i.e. directly resulting from applying the position calculation algorithm to the telephone number. However, as the memory space becomes filled with contact registers, it will become more frequent that the new contact registers cannot be stored in the preferred storage positions, rather they will have to be stored in other positions, which makes the subsequent process of finding the corresponding registers starting from the telephone number slower (as a result of which it may be suitable to save a storage space that is somewhat larger than the number of contact registers allowed).

The memory space can be constituted of a plurality of files, each one comprising a certain number of storage positions. However, it is also possible to use a single byte array as memory space. The type of memory can be, for example, EEPROM memory.

The phone book management module preferably comprises means for searching for a contact register based on comparing a pattern introduced by the subscriber with the contact names of the contact registers stored in the memory space. For example, if the subscriber types "pe", the module can show a list of names on the display comprising, for example, "Pepe", "Peter", "Pederson", etc., according to that which is customary in current mobile telephones. Logically, given that it is not known beforehand where the contact register that is searched for may be located, this process is slower than the process of finding a contact name based on the associated telephone number.

Another aspect of the invention refers to a method of contact register management in a cellular mobile telephone system and comprises the steps of:
- having a phone book comprising, in a subscriber identity card (for example, a SIM or USIM card) for use in a mobile telephone terminal in a cellular mobile telephony system (for example, in GSM or UMTS), memory space comprising a plurality of storage positions for storing a plurality of contact registers, each contact register comprising at least one telephone number and one contact name associated to said telephone number;
- receiving at least one contact register for its storage in the phone book;
- applying, for each contact register received for its storage, a position calculation algorithm to the telephone number of the contact register and obtaining a result;
- storing each contact register received for its storage in a storage position which is, at least partly, a function of the result of the position calculation algorithm applied to the telephone number.

Each contact register is thus stored in a storage position which, at least partly, depends on the telephone number and on the position calculation algorithm. Therefore, when a contact register corresponding to a certain telephone number is searched for (for example, to see to whom said telephone number corresponds), it is not necessary to review all the contact registers stored in the memory space one by one until finding the telephone number in question, but rather it is possible to begin by reviewing the contact register stored in a position obtained by applying the position algorithm to the telephone number searched for. The storage register can thus be located rather quickly, which is important, for example, when the contact name associated to a telephone number of origin of an incoming call is searched for, since many times the subscriber would like to see the name on the display before taking the call.

The method can additionally comprise the steps of, as a response to an incoming call,
- obtaining a telephone number of origin corresponding to said incoming call;
- applying the storage position calculation algorithm to said telephone number of origin;
- searching for said telephone number of origin among the contact registers stored in the memory space, starting from the result of the application of the storage position calculation algorithm to said telephone number of origin;
- obtaining the contact name associated to the telephone number of origin once said telephone number is found among the telephone numbers stored in the memory space; and
- sending to the terminal instructions to display said contact name on a display of the terminal.

Given that the storage position of a contact register is related to the telephone number of the contact register through the position calculation algorithm, it is possible to find the contact register rather quickly, without having to review the contact registers one by one. This is important when it is a smart card, in which searches can be fairly slow processes.

The position calculation algorithm can be a hashing algorithm.

To store a new contact register, it is possible, for example, to proceed in the following manner:
a preferred storage position is calculated by applying the position calculation algorithm to the telephone number of the contact register;
it is checked if said preferred storage position is free or if it already contains a contact register; and
   - if it is free, the new contact register is stored in said position;
   - if it already contains a contact register, the new contact register is stored in another storage position related to said preferred storage position in a predetermined manner (see what has been discussed in relation to the description of the card).

The memory space can be constituted of a plurality of files, each one comprising a certain number of storage positions. However, it is also possible to use a single byte array as memory space. The type of memory can be, for example, EEPROM memory.

Preferably, the method also comprises the step of searching for a contact register based on comparing a pattern introduced by the subscriber with the contact names of the contact registers stored in the memory space (see what has been discussed in relation to the description of the card).

A third aspect of the invention refers to a program product comprising program instruction means for carrying out the method of the invention when the program is carried out in a mobile telephone. The product can be a SAT or USAT application. The product can be stored in a program support means (for example, in an EEPROM memory of a smart card).

The invention can logically be completed with all the standard phone book management mechanisms: means for deleting and editing data, etc.

In addition to the standard functions of the phone book, having a phone book management system entirely in the subscriber identity card (U/SIM) allows the operator of the mobile telephony network to be able to offer its clients the addition of added value services in the phone book. Some examples of added value services could be:
- transformation of the numbers of the phone book to international dialing and vice versa when the subscriber travels abroad; and
- indication of the cost of the call according to the type of call and the time slot.

There are other added advantages of this phone book management system inherent to the storage structure itself, for example:
- the operator can design, according to the preferences of its subscribers, the logical grouping of the phone book numbers; i.e. it can add group functionalities without these being affected by a change of terminals.
- another type of information, such as the postal address, e-mail address, or even a birth date, can be stored along with the name and number information.

Once the main problem is solved, the management of a large amount of data (larger than usual in a U/SIM card), providing the basic functions of a phone book is not complicated:
1) Addition of an element: After editing the data, the application would apply the position calculation algorithm to determine the storage position in which the entry will be stored.
2) Viewing/Editing of data: The subscriber can, for example, introduce a search pattern in a search by name field, and the application will show the contact names of all the contact registers in which the contact name contains this pattern. Once one of the names shown is selected, the data of the corresponding contact register is then shown for the viewing or modification thereof.
3) Elimination of a contact register: The same process as in the previous case can be applied, but after the selection of a register, the latter will be eliminated.
4) Identification of a number of origin corresponding to a call received: the phone book management application can obtain the number of origin (the number of the telephone from which the call is made) using SAT mechanisms. To begin, the card sends to the terminal a proactive command called SETUP EVENT LIST in which it indicates to the terminal which are the events (inactive display, incoming call, finished call, subscriber activity, ...) about which it wishes to be notified. When any of these events occurs, the terminal will notify the card, furthermore sending related information; in the case of the "incoming call" event, the identity (telephone number - MSISDN) of the calling subscriber will be sent using the SAT ENVELOPE EVENT DOWNLOAD - MT CALL command.
   From this number of origin, the phone book management application determines the contact register in which the name of the contact is registered in a quick manner despite the slowness of smart cards.
5) Call register: the application can have the SAT mechanisms which will allow it to be notified when the following events occur:
   - Entry of a call
   - Call answered
   - Lost call'
   - Call made

With this information, and the date and hour information which the card can obtain from the terminal through SAT mechanisms, the phone book management application can construct a call register file with all the information about the calls necessary for the subscriber. This is an added advantage of the system of the phone book managed by the U/SIM card, since this file could be kept in the card and, therefore, it would not be lost when the subscriber changes terminals. Furthermore, in many cases the terminal currently does not show all the information the subscriber might wish to see. For example, when a subscriber receives more than one call per day from the same person, some terminals store only the register of the last call received, thus it is possible that the subscriber is not aware that he or she was called several times. The call register mentioned above could be designed by the operator according to the requests of its clients.

### BRIEF DESCRIPTION OF THE DRAWINGS

A series of drawings helping to better understand the invention, and specifically relating to an embodiment of said invention shown as an illustrative and non-limiting example thereof, is very briefly described below.
Figure 1 schematically shows a subscriber equipment according to the state of the art.
Figures 2 and 3 schematically show two phone book management systems according to the state of the art.
Figure 4 schematically shows a terminal with a card according to the preferred embodiment of the invention.
Figures 5A and 5B show in a somewhat more detailed manner a terminal with a card according to this preferred embodiment of the invention.
Figure 6 schematically shows the main elements of a phone book management application according to this preferred embodiment of the invention.

### DESCRIPTION OF A PREFERRED EMBODIMENT OF THE INVENTION

Figure 4 shows a standard terminal 100 with its display 130, and a card 300 according to a preferred embodiment of the invention, including a standard Subscriber Identity Module 301 and furthermore, a memory space 310 comprising a plurality of files (310A, 310B,...), each of them having n storage positions (p(1), p(2),...p(n+1), ..., p(2n)...), in each one of which a contact register can be stored, constituted of at least one telephone number (for example, 6xxyyzz) and one name (for example, "Pepe").

To store a contact register, the subscriber can start from a telephone number, for example, a telephone number received (6xxyyzz) as "number of origin" in an incoming call. If the subscriber wishes to save this number in the phone book, he or she can type in the corresponding order in the terminal and introduce a name associated to the number ("Pepe").

Then, the terminal applies the position calculation algorithm to said number 6xxyyzz, for example, taking as value of the position the three last figures of the telephone number, for example, yzz. If yzz is a number higher than 0 and lower than "n", the contact register corresponding to "Pepe" + "6xxyyzz" is saved in the position p(yzz) of the file 310A, provided that this position is free. If this position were not free, the contact register would be stored in the first following position (p(yzz+1), p(yzz+2),...) which is free.

All this is managed by means of the phone book management module 320 schematically shown in Figure 4.

If the terminal 100 now receives (step b1 in Figure 4) a telephone call from a telephone with the number 6xxyyzz, the terminal transmits (step b2) this number of origin to the phone book management module 320, which initiates the search for the corresponding contact register. To that end, and in order to not have to "go through" all the contact registers stored in the memory space one by one until finding the number searched for, the phone book management module 320 begins by applying the position calculation algorithm to the telephone number. That is to say, in this preferred embodiment, the phone book management module takes the value of the three last figures "yzz" as a result of the application of the algorithm. Next, the subscriber management module checks, by means of reading (step b3) the position p(yzz) of the memory space 310, if the telephone number of the contact register stored in the position "p(yzz)" of the memory space 310 coincides with the number of origin received. If it coincides, the phone book management module 320 reads the contact name ("Pepe") and sends (step b4) instructions to display said contact name ("Pepe") on the display 130 to the terminal 100, for example, along with the number of origin ("6xxyyzz"). On the contrary, if the telephone number of the contact register stored in the position "p(yzz)" of the memory space 310 does not coincide with the number of origin received, the phone book management module (320) successively reads the telephone numbers stored in the following positions (p(yzz+1), p(yzz+2),...) until finding the number of origin (or until having read all the telephone numbers stored).

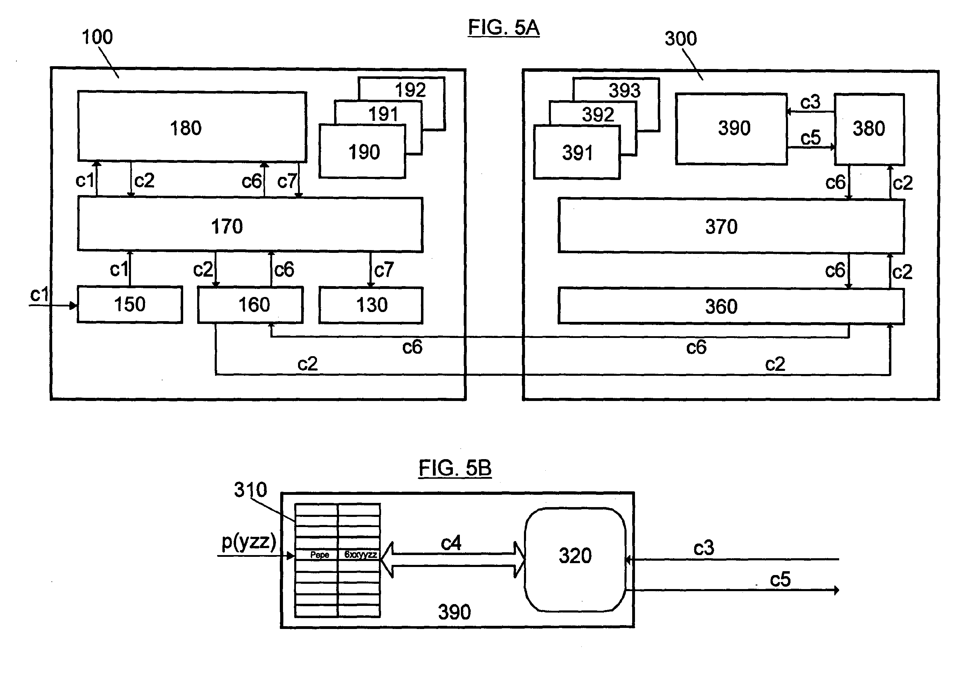

Figures 5A and 5B show this process in a somewhat more detailed manner:

In Figure 5A, a terminal is observed comprising a radio module 150 (including an antenna, etc.), a module 160 of communication with the card (SIM), a display 130, an operating system 170, a SAT (SAT: SIM Application Toolkit) manager 180 and a plurality of different applications (190, 191, 192). On the other hand, a card 300 is shown, comprising a module 360 of communication with the terminal, an operating system 370, a SAT manager 380, a phone book management application 390 (and a plurality of additional applications 391-393).

In Figure 5B, a detail of the phone book management application 390 is observed, comprising the phone book management module 320 and the memory space 310 in which, in the position p(yzz), the contact register constituted of the name "Pepe" and the telephone number "6xxyyzz" is stored.

Now, somebody calls from the telephone of "Pepe" and, in step c1 shown in Figure 5A, the call enters through the radio module 150, and, through the operating system 170, the SAT manager 180 of the terminal receives a notification that a call with number of origin 6xxyyzz has entered. In step c2, the SAT manager 180 generates an event for the card which is communicated, through the operating system 170 and through the module 160 of communication with the card, to the card 300. In the card, said event is communicated (c2), through the module 360 of communication with the terminal and through the operating system 370 of the card, to the SAT manager 380 of the card. This SAT manager, which "knows" that the phone book management application 390 has requested to be notified when this event occurs, notifies (step c3) the phone book management application 390 that the event has occurred and submits the number of origin 6xxyyzz to the phone book management application.

As is schematically shown in Figure 5B, in the phone book management application, the phone book management module 320 applies, as has been described above, the position calculation algorithm to the number 6xxyyzz, obtains the position number p(yzz) and reads (step c4) the telephone number of the contact register stored in said position. If this number coincides with the number of origin, the phone book management module 320 reads the contact name ("Pepe") of the contact register occupying the position p(yzz), and sends it (step c5) to the SAT manager 380, indicating that this name must be shown on the display 130 of the terminal. The SAT manager 380 of the card sends these instructions (step c6) to the SAT manager 180 of the terminal 100. The SAT manager 180 of the terminal takes charge of showing the contact name ("Pepe") on the display 130 of the terminal, according to that indicated by the phone book management module 320 (step c7).

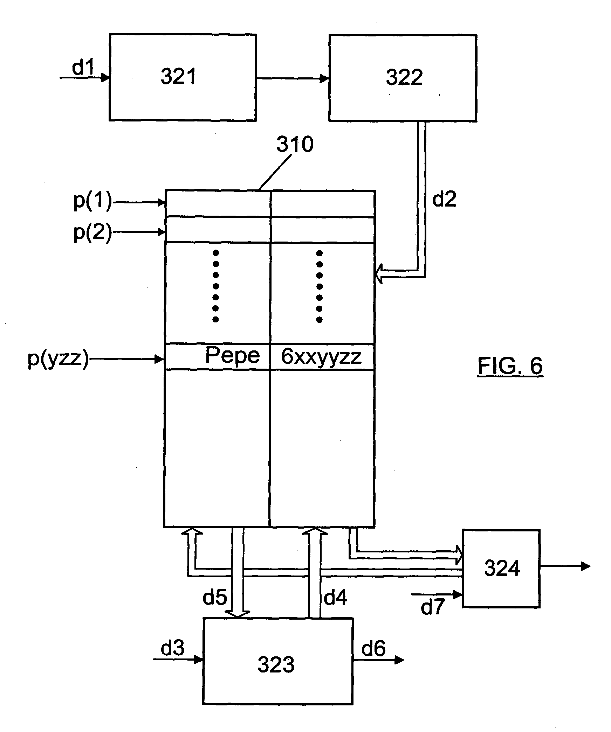

Figure 6 schematically shows some of the main functional components of the phone book management application 390. Specifically, Figure 6 shows the memory space 310, divided in a plurality of storage positions (p(1), p(2),...,p(yzz),...), each one being able to house a contact register made up of at least one contact name (for example, "Pepe") and one telephone number (for example, "6xxyyzz"). The phone book management application additionally comprises means 321 for receiving (d1) contact registers and means 322 for storing (step d2) contact registers in a contact position calculated by applying the position calculation algorithm to the telephone number of the contact register, for example, beginning by attempting to store the contact register in a storage position p(yzz) corresponding to the last three figures of the telephone number, and if said position is not free, in the first following storage position which is free.

According to this preferred embodiment of the invention, the phone book management module furthermore comprises means 323 for, as a response to an incoming call,
- obtaining/receiving (step d3) a telephone number of origin corresponding to said incoming call;
- applying the storage position calculation algorithm to said telephone number of origin and obtaining a result;
- searching for (step d4) said telephone number of origin among the contact registers stored in the memory space 310, starting from the result of the application of the position calculation algorithm to said telephone number of origin (for example, in the case of the algorithm mentioned above, beginning the search in the position corresponding to three last figures of the telephone number, and if this storage position does not contain the telephone number of origin, continuing the search in the following storage positions until finding a contact register in which the content of the field corresponding to the telephone number is identical to the telephone number of origin);
- obtaining (step d5) the contact name associated to the telephone number of origin once said telephone number is found among the telephone numbers stored in the memory space 310;
- sending (step d6) to the terminal instructions to display said contact name on a display 130 of the terminal.

Figure 6 also schematically shows means 324 for searching for a contact register based on comparing a pattern introduced by the subscriber (received in step d7), with the contact names of the contact registers stored in the memory space. These means can be implemented with the GSM "SEEK" command which is used to search for patterns in a register file.

Throughout the present description and claims, the word "comprises" and variations thereof, such as "comprising", do not intend to exclude other steps or components.

## Claims

1. A card (300) for use in a mobile telephone terminal (100) in a cellular mobile telephony system, which card includes a Subscriber Identity Module (301) (SIM/USIM), and a phone book comprising memory space (310) for storing a plurality of contact registers such that each contact register is stored in a storage position (p(1), p(2); p(n), p(n+1); p(2n)) within the memory space (310), each contact register comprising at least one telephone number and one contact name associated to said telephone number, **characterized in that** the phone book furthermore comprises:
a phone book management module (320) housed in the card (300) and comprising:
means (321) for receiving contact registers; and
means (322) for storing contact registers in said memory space (310), said means (322) for storing contact registers being configured such that each contact register is stored in a storage position which is determined by applying a position calculation algorithm to the telephone number of the contact register, such that the storage position in which the contact register is stored is, at least partly, a function of a result of the application of said position calculation algorithm to the telephone number of the contact register.

2. A card according to claim 1, **characterized in that** the phone book management module (320) furthermore comprises means (323) for, as a response to an incoming call,
- obtaining a telephone number of origin corresponding to said incoming call; applying the position calculation algorithm to said telephone number of origin and obtaining a result;
- searching for said telephone number of origin among the contact registers stored in the memory space (310), starting from the result of the application of storage position calculation algorithm to said telephone number of origin;
- obtaining the contact name associated to the telephone number of origin once said telephone number is found among the telephone numbers stored in the memory space (310);
- sending to the terminal (100) the instructions to display said contact name on a display (130) of the terminal.

3. A card according to any of claims 1 and 2, **characterized in that** the position calculation algorithm is a hashing algorithm.

4. A card according to any of claims 1-3, **characterized in that** the means (322) for storing contact registers are configured such that to store a new contact register, a preferred storage position is calculated by applying the position calculation algorithm to the telephone number of the contact register;
it is checked if said preferred storage position in the memory space (310) is free or if it already contains a contact register; and
- if it is free, the new contact register is stored in said storage position;
- if it already contains a contact register, the new contact register is stored in another storage position, related to said preferred storage position in a predetermined manner.

5. A card according to any of the previous claims, **characterized in that** the memory space (310) is constituted of a plurality of files (310A, 310B), each one comprising a determined number (n) of storage positions.

6. A card according to any of claims 1-4, **characterized in that** the memory space is constituted of a byte array.

7. A card according to any of the previous claims, **characterized in that** the phone book management module (320) comprises means (324) for searching for a contact register based on comparing a pattern introduced by the subscriber with the contact names of the contact registers stored in the memory space (310).

8. A method of contact register management in a cellular mobile telephony system, comprising the steps of:
- having a phone book comprising, in a subscriber identity card (300) for use in a mobile telephone terminal (100) in a cellular mobile telephony system, memory space (310) comprising a plurality of storage positions (p(1), p(2); p(n), p(n+1); p(2n)) for storing a plurality of contact registers, each contact register comprising at least one telephone number and one contact name associated to said telephone number; **characterized in that** it furthermore comprises the steps of:
- receiving at least one contact reg ister for its storage in the phone book;
- applying, for each contact register received for its storage, a position calculation algorithm to the telephone number of the contact register and obtaining a result;
- storing each contact register received for its storage in a storage position which is, at least partly, a function of the result of the position calculation algorithm applied to the telephone number.

9. A method according to claim 8, **characterized in that** it additionally comprises the steps of, as a response to an incoming call,
- obtaining a telephone number of origin corresponding to said incoming call;
- applying the storage position calculation algorithm to said telephone number of origin;
- searching for said telephone number of origin among the contact registers stored in the memory space (310), starting from the result of the application of the storage position calculation algorithm to said telephone number of origin;
- obtaining the contact name associated to the telephone number of origin once said telephone number is found among the telephone numbers stored in the memory space (310); and
- sending to the terminal (100) instructions to display said contact name on a display (130) of the terminal.

10. A method according to any of claims 8 and 9, **characterized in that** the position calculation algorithm is a hashing algorithm.

11. A method according to any of claims 8-10, **characterized in that** to store a new contact register,
a preferred storage position is calculated by applying the position calculation algorithm to the telephone number of the contact register;
it is checked if said preferred storage position is free or if it already contains a contact register; and
- if it is free, the new contact register is stored in said position;
- if it already contains a contact register, the new contact register is stored in another storage position related to said preferred storage position in a predetermined manner.

12. A method according to any of claims 8-11, **characterized in that** the memory space (310) is constituted of a plurality of files (310A, 310B), each one comprising a certain number (n) of storage positions.

13. A method according to any of claims 8-12, **characterized in that** it comprises the step of searching for a contact register based on comparing a pattern introduced by the subscriber with the contact names of the contact registers stored in the memory space (310).

14. A program product comprising program instruction means for carrying out the method defined in any of claims 8-13 when the program is carried out in a mobile telephone.

15. A program product according to claim 14 stored in a program support means.
